# EUROPEAN PATENT APPLICATION

(11) **EP 3 860 212 A1**
(43) Date of publication of application: **04.08.2021**
(21) Application number: 18935934.2
(22) Date of filing: 27.09.2018
(51) Int. Cl.: H04W 28/18, H04W 4/06, H04W 92/18

(54) **TERMINAL DEVICE, WIRELESS COMMUNICATION SYSTEM, AND WIRELESS TRANSMISSION METHOD**

(71) Applicant: FUJITSU LIMITED, Kanagawa 211-8588 (JP)
(72) Inventor: WU, Jianming, Kawasaki-shi, Kanagawa 211-8588 (JP)
(74) Representative: Haseltine Lake Kempner LLP
(86) International application number: PCT/JP2018/036107
(87) International publication number: WO 2020/065877

(57) **Abstract**

A terminal device (2) includes a communicating unit (31), a measuring unit (32), and a selecting unit (33). The communicating unit directly communicates with another terminal device through a radio link. The measuring unit measures, based on a reception signal output from the other terminal device included in a same group, a communication state of the radio link with the other terminal device. The selecting unit selects a radio link having a lowest communication state out of the communication states measured by the measuring unit. The communicating unit performs wireless transmission with the other terminal device included in the group based on a transmission criterion that allows the communication state of the lowest radio link selected by the selecting unit to be a predetermined communication state. As a result, there is a demand for ensuring high reliability of wireless communication.

## Description

### Field

The present invention relates to a terminal device, a wireless communication system, and a wireless transmission method.

### Background

In the current networks, traffic of mobile terminals, such as smartphones and feature phones, occupies most of network resources. Furthermore, traffic used by mobile terminals tends to be continuously increased in the future.

In contrast, with the development of Internet of a things (IoT) services, such as services of, for example, monitoring systems including transportation systems, smart meters, devices, and the like, there is a demand for coping with services having various kinds of request conditions. Thus, in the communication standards for the fifth generation mobile unit communication (5G or New Radio (NR)), in addition to the standard technologies (for example, Non Patent Literatures 1 to 12) of the fourth generation mobile unit communication (4G), there is a demand for a technology that implements high-data-rate, high-capacity, and low-delay communication. Furthermore, regarding the fifth generation communication standards, technical studies are being conducted in 3GPP working groups (for example, TSG-RAN WG1, TSG-RAN WG2, and the like) (Non Patent Literatures 13 to 39).

As described above, in 5G, in order to respond various kinds of services, support of a lot of use cases classified into enhanced mobile broadband (eMBB), machine type communications (Massive MTC), and ultra-reliable and low latency communication (URLLC) is conceived. Furthermore, in the 3GPP working groups, Vehicle to Everything (V2X) communication is also discussed. Furthermore, in the 3GPP working groups, Device to Device (D2D) communication is also discussed. D2D communication is also sometimes called sidelink communication. Furthermore, as extension of D2D communication, V2X is studied. V2X communication is communication performed by using, for example, sidelink channels and an example of V2X communication includes, for example, Vehicle to Vehicle (V2V) communication, Vehicle to Pedestrian (V2P) communication, Vehicle to Infrastructure (V2I) communication, Vehicle to Network (V2N), and the like. V2V communication is communication between an automobile and an automobile, V2P communication is communication between an automobile and a walker (Pedestrian), V2I communication is communication between an automobile and a road infrastructure, such as an indicator, and V2N communication is communication between an automobile and a network. Prescriptions related to V2X is described in, for example, Non Patent Literature 1.

Regarding a technique for allocating resources of V2X in 4G, there are, for example, a technique in which a wireless communication system intensively performs control and a technique in which each terminal device that performs V2X autonomously performs control. The technique in which a radio system intensively performs control is applicable when a terminal device that performs V2X is present in a coverage of a base station included in the wireless communication system and is also called a mode 3. In contrast, the technology in which each of the terminal devices autonomously performs control is applicable even when each of the terminal devices is not present in the coverage of the base station and is also called a mode 4. In the mode 4, communication for allocating the resources between the terminal devices and the base station is not performed.

Then, in the mode 4, by using a sidelink channel, wireless communication is performed, for example, in unicast between terminal devices, in group cast among a plurality of terminal devices included in the same group, or in broadcast among a plurality of terminal devices. For example, there is a proposed structure in which each of the terminal devices in the same group feeds back, for each terminal device, channel status information (CSI) that indicates a communication state of the radio link to the terminal device present on the opposite side and ensure, based on the CSI, high degree of reliability of wireless communication between the terminal devices.

### Citation List

### Non Patent Citation

Non Patent Literature 1: 3GPP TS 22.186 V16.0.0 (2018-09)
Non Patent Literature 2: 3GPP TS 36.211 V15.2.0 (2018-06)
Non Patent Literature 3: 3GPP TS 36.212 V15.2.1 (2018-07)
Non Patent Literature 4: 3GPP TS 36.213 V15.2.0 (2018-06)
Non Patent Literature 5: 3GPP TS 36.300 V15.2.0 (2018-06)
Non Patent Literature 6: 3GPP TS 36.321 V15.2.0 (2018-07)
Non Patent Literature 7: 3GPP TS 36.322 V15.1.0 (2018-07)
Non Patent Literature 8: 3GPP TS 36.323 V15.0.0 (2018-07)
Non Patent Literature 9: 3GPP TS 36.331 V15.2.2 (2018-06)
Non Patent Literature 10: 3GPP TS 36.413 V15.2.0 (2018-06)
Non Patent Literature 11: 3GPP TS 36.423 V15.2.0 (2018-06)
Non Patent Literature 12: 3GPP TS 36.425 V15.0.0 (2018-06)
Non Patent Literature 13: 3GPP TS 37.340 V15.2.0 (2018-06)
Non Patent Literature 14: 3GPP TS 38.201 V15.0.0 (2017-12)
Non Patent Literature 15: 3GPP TS 38.202 V15.2.0 (2018-06)
Non Patent Literature 16: 3GPP TS 38.211 V15.2.0 (2018-06)
Non Patent Literature 17: 3GPP TS 38.212 V15.2.0 (2018-06)
Non Patent Literature 18: 3GPP TS 38.213 V15.2.0 (2018-06)
Non Patent Literature 19: 3GPP TS 38.214 V15.2.0 (2018-06)
Non Patent Literature 20: 3GPP TS 38.215 V15.2.0 (2018-06)
Non Patent Literature 21: 3GPP TS 38.300 V15.2.0 (2018-06)
Non Patent Literature 22: 3GPP TS 38.321 V15.2.0 (2018-06)
Non Patent Literature 23: 3GPP TS 38.322 V15.2.0 (2018-06)
Non Patent Literature 24: 3GPP TS 38.323 V15.2.0 (2018-06)
Non Patent Literature 25: 3GPP TS 38.331 V15.2.1 (2018-06)
Non Patent Literature 26: 3GPP TS 38.401 V15.2.0 (2018-06)
Non Patent Literature 27: 3GPP TS 38.410 V15.0.0 (2018-06)
Non Patent Literature 28: 3GPP TS 38.413 V15.0.0 (2018-06)
Non Patent Literature 29: 3GPP TS 38.420 V15.0.0 (2018-06)
Non Patent Literature 30: 3GPP TS 38.423 V15.0.0 (2018-06)
Non Patent Literature 31: 3GPP TS 38.470 V15.2.0 (2018-06)
Non Patent Literature 32: 3GPP TS 38.473 V15.2.1 (2018-07)
Non Patent Literature 33: 3GPP TR 38.801 V14.0.0 (2017-03)
Non Patent Literature 34: 3GPP TR 38.802 V14.2.0 (2017-09)
Non Patent Literature 35: 3GPP TR 38.803 V14.2.0 (2017-09)
Non Patent Literature 36: 3GPP TR 38.804 V14.0.0 (2017-03)
Non Patent Literature 37: 3GPP TR 38.900 V15.0.0 (2018-06)
Non Patent Literature 38: 3GPP TR 38.912 V15.0.0 (2018-06)
Non Patent Literature 39: 3GPP TR 38.913 V15.0.0 (2018-06)

### Summary

### Technical Problem

However, for example, in the plurality of terminal devices included in the same group, as the number of units M of the terminal devices is increased, the number of pieces of feedback (M (M-1)) of the CSI in each of the radio links between the terminal devices is increased; therefore, the processing load needed for the feedback becomes large. Furthermore, in a case in which the terminal device is mounted on a vehicle that is moving at high speed, it is also assumed a case in which the communication state is rapidly changed in accordance with the movement of the vehicle; therefore, there is a case in which CSI feedback is not needed. As a result, there is a demand for ensuring high reliability of wireless communication.

Accordingly, the present invention has been conceived in light of the circumstances described above and an object thereof is to be able to ensure high reliability of wireless communication.

### Solution to Problem

According to an aspect, a terminal device includes a communicating unit, a measuring unit and a selecting unit. The communicating unit directly communicates with another terminal device through a radio link. The measuring unit measures, based on a reception signal output from the other terminal device included in a same group, a communication state of the radio link with the other terminal device. The selecting unit selects a radio link having a lowest communication state out of the communication states measured by the measuring unit. The communicating unit performs wireless transmission with the other terminal device included in the group based on a transmission criterion that allows the communication state of the lowest radio link selected by the selecting unit to be a predetermined communication state.

### Advantageous Effects of Invention

According to an aspect of an embodiment, there is a demand for ensuring high reliability of wireless communication.

### Brief Description of Drawings

FIG. 1 is a diagram illustrating an example of a wireless communication system according to a first embodiment.
FIG. 2 is a block diagram illustrating an example of a hardware configuration of a terminal device.
FIG. 3 is a block diagram illustrating an example of a functional configuration of the terminal device.
FIG. 4A is a diagram illustrating an example of a worst link decision operation of a terminal device indicated by V1.
FIG. 4B is a diagram illustrating an example of the worst link decision operation of a terminal device indicated by V2.
FIG. 4C is a diagram illustrating an example of the worst link decision operation of a terminal device indicated by V3.
FIG. 4D is a diagram illustrating an example of the worst link decision operation of a terminal device indicated by V4.
FIG. 5A is a diagram illustrating an example of a MCS setting operation of the terminal device indicated by V1.
FIG. 5B is a diagram illustrating an example of the MCS setting operation of the terminal device indicated by V2.
FIG. 5C is a diagram illustrating an example of the MCS setting operation of the terminal device indicated by V3.
FIG. 5D is a diagram illustrating an example of the MCS setting operation of the terminal device indicated by V4.
FIG. 6 is a diagram illustrating an example of a worst link of each of the terminal devices included in a group.
FIG. 7 is a flowchart illustrating an example of a processing operation of the terminal device related to a setting process according to the first embodiment.
FIG. 8 is a block diagram illustrating an example of a functional configuration of a terminal device according to a second embodiment.
FIG. 9 is a diagram illustrating an example of a CSI feedback operation of each of the terminal devices included in the group.
FIG. 10 is a flowchart illustrating an example of a processing operation of the terminal device related to a first feedback process according to the second embodiment.
FIG. 11 is a block diagram illustrating an example of a functional configuration of a terminal device according to a third embodiment.
FIG. 12 is a diagram illustrating an example of a CSI feedback operation between a terminal device on a reception side and a terminal device on a transmission side.
FIG. 13 is a flowchart illustrating an example of a processing operation of the terminal device related to a second feedback process according to the third embodiment.
FIG. 14 is a block diagram illustrating an example of a functional configuration of a terminal device according to a fourth embodiment.
FIG. 15 is a diagram illustrating an example of a CSI feedback operation of each of the terminal devices in the group.
FIG. 16 is a flowchart illustrating an example of a processing operation of the terminal device related to a feedback setting process according to the fourth embodiment.
FIG. 17 is a block diagram illustrating a functional configuration of a terminal device according to a fifth embodiment.
FIG. 18A is a diagram illustrating an example of an operation related to a difference transmission process performed by the terminal device indicated by V1.
FIG. 18B is a diagram illustrating an example of the operation related to the difference transmission process performed by the terminal device indicated by V1.
FIG. 19 is a flowchart illustrating an example of a processing operation of the terminal device related to the difference transmission process.
FIG. 20 is a flowchart illustrating an example of a processing operation of a terminal device related to an updating process.

### Description of Embodiments

Preferred embodiments of the present invention will be explained in detail with reference to accompanying drawings. Problems and embodiments in this specification are only examples and do not limit the scope of rights. In particular, even when described expressions are different, the technologies described in the present application are applicable as long as the content is technically identical and the scope of rights are not limited. Furthermore, each of the embodiments can be appropriately used in combination as long as the processing content do not conflict with each other.

Furthermore, regarding the words used in this application and the described technical content, it may also be possible to appropriately use the words and the technical content described in the specifications or contributed articles as the standards related to communication, such as 3GPP or the like. An example of such specifications includes, for example, 3GPP TS 38.211 V15.1.0 (2018-03) described above.

Preferred embodiments of a terminal device, a wireless communication system, and a wireless transmission method disclosed in the present invention will be explained in detail below with reference to the accompanying drawings. Furthermore, the embodiments described below do not limit the present invention.

### First Embodiment

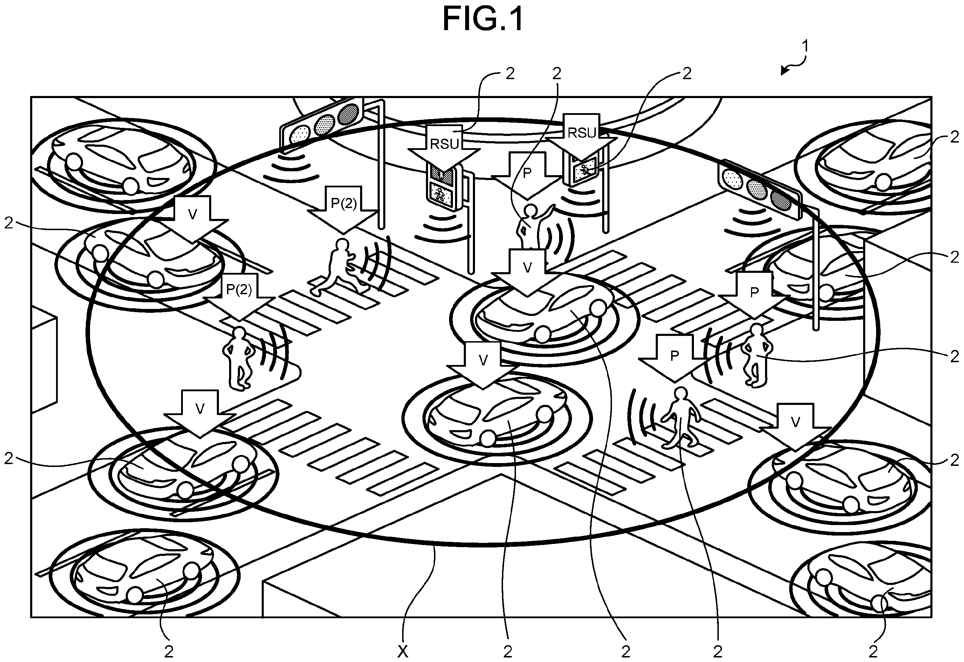

FIG. 1 is a diagram illustrating an example of a wireless communication system 1 according a first embodiment. The wireless communication system 1 illustrated in FIG. 1 is a wireless communication system of NR-V2X in, for example, the mode 4. The wireless communication system 1 includes a plurality of terminal devices 2. Each of the terminal devices 2 is, for example, a terminal device mounted in a vehicle V or a road unit RSU (Road Side Unit) or a terminal device, such as a smart phone, carried by a pedestrian (P). In the wireless communication system 1 in the mode 4, wireless communication is directly performed via a radio link by both of the terminal devices 2 without by way of the base station.

In the wireless communication system 1 in the mode 4, each of the terminal devices 2 that performs V2X communication autonomously controls the resources and this mode is applicable even when the terminal devices 2 are not present in the coverage of the base station. Furthermore, for convenience of description, although not illustrated in the drawings, in the radio system in the mode 3, a base station intensively controls the resources and this mode is applicable when the terminal device that performs V2X communication is present in the coverage of the base station.

In R16, NR-V2X (Release 16 New Radio-Vehicle to Everything), for example, there is a service of Advanced V2X, such as vehicle platooning, advanced driving, extended sensors, remote driving, or the like. Vehicle platooning is a service in which, for example, a plurality of vehicles V each having mounted thereon the terminal device 2 are automatically running in line. Advanced driving is a service of, for example, support system or the like that prevents deviation of a lane of the running vehicle V on which the terminal device 2 is mounted. The extended sensor is a service in which, for example, a sensor result detected by the vehicle V on which the terminal device 2 is mounted is used by another vehicle V on which another terminal device 2 is mounted. Remote driving is a driving service remotely provided to, for example, the vehicle V on which the terminal device 2 is mounted.

Regarding the service requirements for vehicle platooning, radio condition that, for example, the maximum allowable delay time (max end to end latency) be 10 milliseconds, the degree of reliability be 99.99%, the data rate be 65 Mbps, and the minimum wireless range be 80 meters is requested. Regarding the service requirements for advanced driving, the radio condition that, for example, the maximum allowable delay time be 3 milliseconds, the degree of reliability be 99.999%, the data rate be 53 Mbps, and the minimum wireless range be 500 meters is requested. Furthermore, regarding the extended sensor, the radio condition that, for example, the maximum allowable delay time be 3 milliseconds, the degree of reliability be 99.999%, the data rate be 1000 Mbps, and the minimum wireless range be 1000 meters is requested. Regarding the service requirements for the remote driving, the radio condition that, for example, the maximum allowable delay time be 5 milliseconds, the degree of reliability be 99.999%, the data rate in an uplink be 25 Mbps, and the data rate of a downlink be 1 Mbps is requested.

In the wireless communication system 1 illustrated in FIG. 1, in addition to unicast communication performed between terminal devices 2 and broadcast communication performed inside the wireless communication system 1, there is group cast communication performed by grouping the terminal devices 2 included in, for example, a predetermined wireless communication range X and performing wireless communication between the terminal devices 2 in the same group.

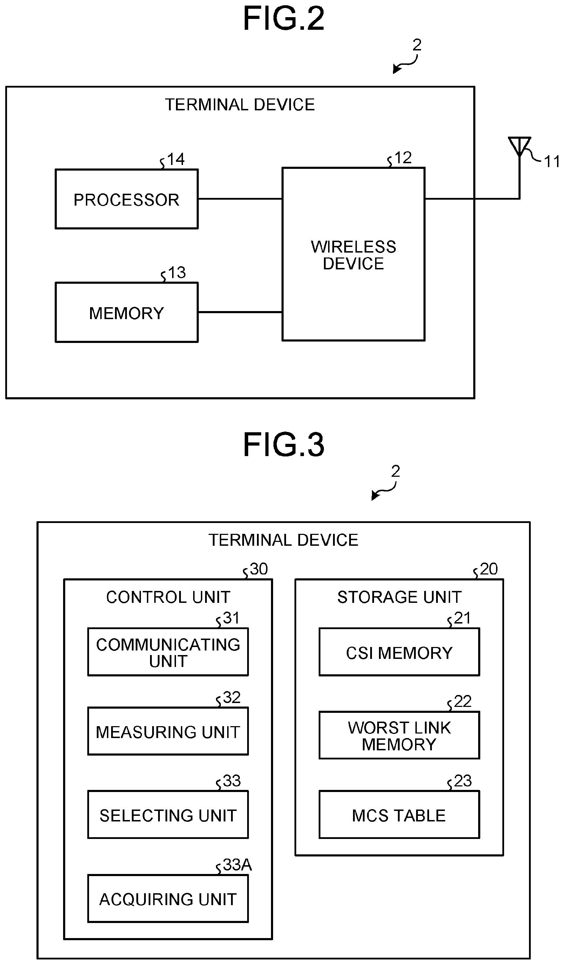

FIG. 2 is a block diagram illustrating an example of a hardware configuration of the terminal device 2. The terminal device 2 illustrated in FIG. 2 includes a radio antenna 11, a wireless device 12, a memory 13, and a processor 14. The radio antenna 11 is an antenna that transmits and receives a radio signal for performing wireless communication with, for example, the other terminal device 2. The radio antenna 11 is an antenna that transmits and receives, for example, a radio signal for V2X communication performed in the mode 4, a radio signal for normal cellular communication, or the like.

The wireless device 12 is a radio interface (IF) that manages wireless communication of the terminal device 2. The wireless device 12 has a V2X reception function that is a reception function of V2X communication and a V2X transmission function that is a transmission function of V2X communication. Furthermore, the wireless device 12 has a cellular reception function that is a reception function of cellular communication and a cellular transmission function that is a transmission function of cellular communication. The memory 13 is a storage device, such as a read only memory (ROM), random access memory (RAM), or the like, that stores therein, for example, programs, various kinds of information, and the like. The processor 14 is a control device that performs overall control of the terminal device 2.

FIG. 3 is a block diagram illustrating an example of a functional configuration of the terminal device 2. The terminal device 2 includes a storage unit 20 and a control unit 30. The storage unit 20 includes a channel status information (CSI) memory 21, a worst link memory 22, and a modulation and coding scheme (MCS) table 23. The CSI memory 21 is an area in which the measured CSI that will be described later is stored. The worst link memory 22 is an area in which a worst link that will be described later is stored. The MCS table 23 is a table that manages the MCS conforming to, for example, each channel quality indicator (CQI) in the CSI. Furthermore, the MCS that conforms to the CQI is the MCS that allows the CQI of the radio link between the terminal devices 2 to be acceptable. The processor 14 reads the programs stored in, for example, a read only memory (ROM) (not illustrated) in the memory 13. The processor 14 executes the function of, for example, a communicating unit 31, a measuring unit 32, a selecting unit 33, and an acquiring unit 33A as the control unit 30 by executing the read programs.

The communicating unit 31 has a function for controlling, via the radio link, the wireless device 12 that directly performs wireless communication with, for example, the other terminal device 2 included in the group. The measuring unit 32 has a function for measuring a communication state of the radio link with the other terminal device 2 based on the reception signal output from, for example, the other terminal device 2 included in the group. The measuring unit 32 measures the CSI that is the communication state of the radio link with the other terminal device 2 based on a demodulation reference signal (DMRS) included in the reception signal received from the other terminal device 2. The measuring unit 32 stores the CSI measured for each radio link in the CSI memory 21 as a measured CSI. The selecting unit 33 has a function for selecting a radio link of the worst CSI, i.e., the worst link out of the CSI of the radio link of each of the terminal devices 2 measured by the measuring unit 32. The communicating unit 31 decides a transmission criterion, such as MCS, for allowing the CSI of the worst link selected by the selecting unit 33 to be a predetermined communication state and performs wireless transmission with respect to the other terminal device 2 included in the group by using the decided MCS. Furthermore, the predetermined communication state is a communication state that satisfies, for example, the V2X service requirements. The acquiring unit 33A decodes PSCCH included in the reception signal and acquires control information. Furthermore, an example of performing measurement by using the DMRS has been described; however, it may also be possible to measure the CSI by using a signal other than the DMRS.

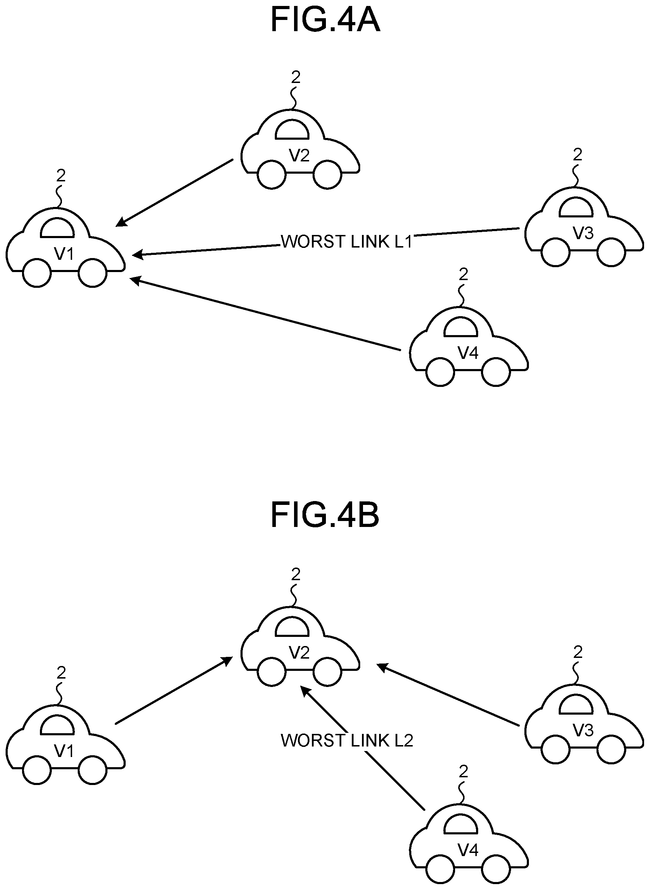

In the following, an operation of the wireless communication system 1 according to the first embodiment will be described. FIG. 4A is a diagram illustrating an example of a worst link decision operation of the terminal device 2 indicated by V1. Furthermore, for convenience of description, it is assumed that, as illustrated in FIG. 4A, the terminal devices 2 included in the same group are, for example, the four terminal devices 2 mounted on vehicles V1, V2, V3, and V4. The terminal device 2 indicated by V1 illustrated in FIG. 4A receives reception signals output from the terminal devices 2 indicated by V2, V3, and V4 included in the group and measures the CSI of the radio link with each of the terminal devices 2 indicated by V2, V3, and V4 based on the DMRSs included in the associated reception signals. The terminal device 2 indicated by V1 stores the measured CSI associated with each of the terminal devices 2 in the CSI memory 21. The terminal device 2 indicated by V1 determines that the CSI associated with the terminal device 2 indicated by V3 is the worst CSI out of the CSI obtained from the measurement result and selects a radio link L3 with the terminal device 2 indicated by V3 having the worst CSI as the worst link. Then, the terminal device 2 indicated by V1 stores the radio link L3 as the worst link in the worst link memory 22.

FIG. 4B is a diagram illustrating an example of a worst link decision operation of the terminal device 2 indicated by V2. The terminal device 2 indicated by V2 illustrated in FIG. 4B receives the reception signals output from the terminal devices 2 indicated by V1, V3, V4 included in the group and measures the CSI of the radio link with each of the terminal devices 2 indicated by V1, V3, V4 based on the DMRSs included in the associated reception signals. The terminal device 2 indicated by V2 stores the measured CSI associated with each of the terminal devices 2 in the CSI memory 21. The terminal device 2 indicated by V2 determines that the CSI associated with the terminal device 2 indicated by V4 is the worst CSI out of the CSI obtained from the measurement result and selects the radio link L2 with the terminal device 2 indicated by V4 having the worst CSI as the worst link. Then, the terminal device 3 indicated by V2 stores the radio link L2 as the worst link in the worst link memory 22.

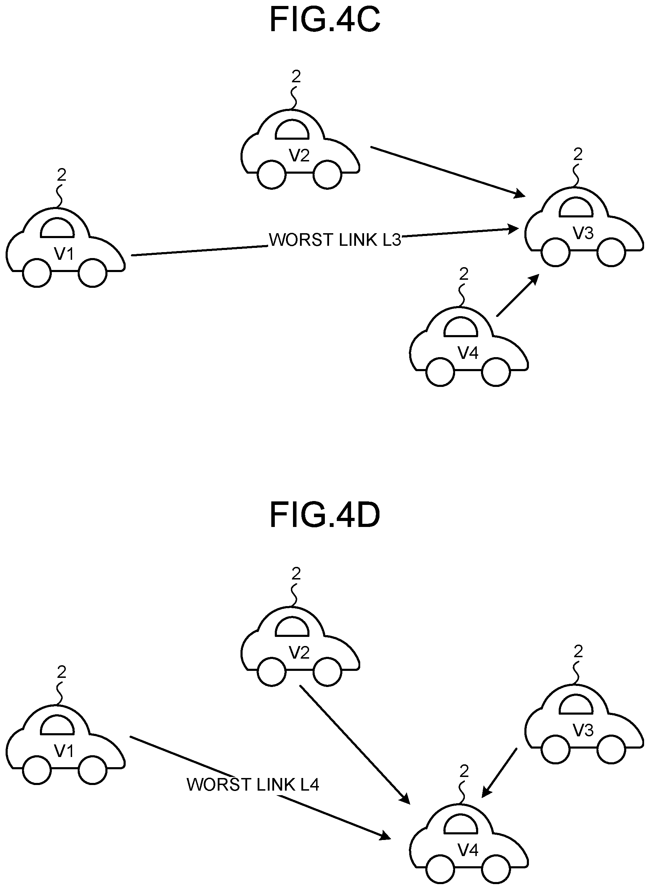

FIG. 4C is a diagram illustrating an example of a worst link decision operation of the terminal device 2 indicated by V3. The terminal device 2 indicated by V3 illustrated in FIG. 4C receives reception signals output from the terminal devices 2 indicated by V1, V2, and V4 in the group and measures the CSI of the radio link with each of the terminal devices 2 indicated by V1, V2, and V4 based on the DMRSs included in the associated reception signals. The terminal device 2 indicated by V3 stores the measured CSI associated with each of the terminal devices 2 in the CSI memory 21. The terminal device 2 indicated by V3 determines that the CSI associated with the terminal device 2 indicated by V1 is the worst CSI out of the CSI obtained from the measurement result and selects the radio link L3 with the terminal device 2 indicated by V1 having the worst CSI as the worst link. Then, the terminal device 3 indicated by V3 stores the radio link L3 as the worst link in the worst link memory 22.

FIG. 4D is a diagram illustrating an example of a worst link decision operation of the terminal device 2 indicated by V4. The terminal device 2 indicated by V4 illustrated in FIG. 4D receives reception signals output from the terminal devices 2 indicated by V1, V2, and V3 included in the group and measures the CSI of the radio link with each of the terminal devices 2 indicated by V1, V2, and V3 based on the DMRSs included in the reception signals. The terminal device 2 indicated by V4 stores the measured CSI associated with each of the terminal devices 2 in the CSI memory 21. The terminal device 2 indicated by V4 determines that the CSI associated with the terminal device 2 indicated by V1 is the worst CSI out of the CSI obtained from the measurement result and selects the radio link L4 with the terminal device 2 indicated by V1 having the worst CSI as the worst link. Then, the terminal device 3 indicated by V4 stores the radio link L4 as the worst link in the worst link memory 22.

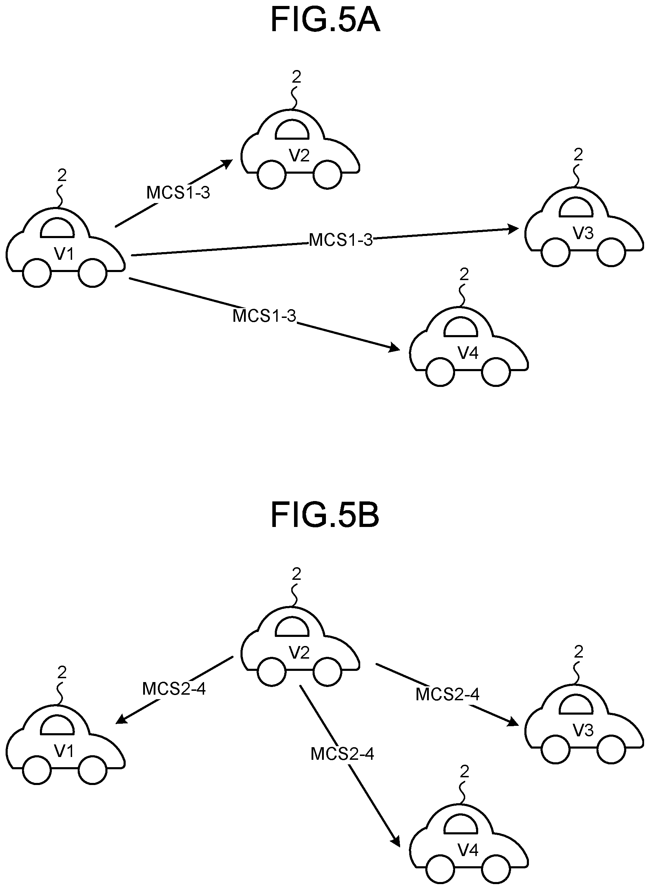

In the following, a description will be given of a setting operation of the MCS performed by each of the terminal devices 2 after each of the terminal devices 2 has selected the worst link. FIG. 5A is a diagram illustrating a MCS setting operation of the terminal device 2 indicated by V1. After the terminal device 2 indicated by V1 selects the worst link L1 with the terminal device 2 indicated by V3, the terminal device 2 indicated by V1 refers to the MCS table 23 and decides the MCS that is associated with the worst link CSI. The terminal device 2 indicated by V1 sets the decided MCS to a transmission criterion and results in performing wireless transmission with respect to the terminal devices 2 indicated by V2, V3, and V4 included in the group based on the subject transmission criterion.

FIG. 5B is a diagram illustrating an example of the MCS setting operation of the terminal device 2 indicated by V2. After the terminal device 2 indicated by V2 selects the worst link L2 with the terminal device 2 indicated by V4, the terminal device 2 indicated by V2 refers to the MCS table 23 and decides the MCS associated with the worst link CSI. The terminal device 2 indicated by V2 sets the decided MCS to the transmission criterion and results in performing wireless transmission with respect to the terminal devices 2 indicated by V1, V3, and V4 included in the group based on the subject transmission criterion.

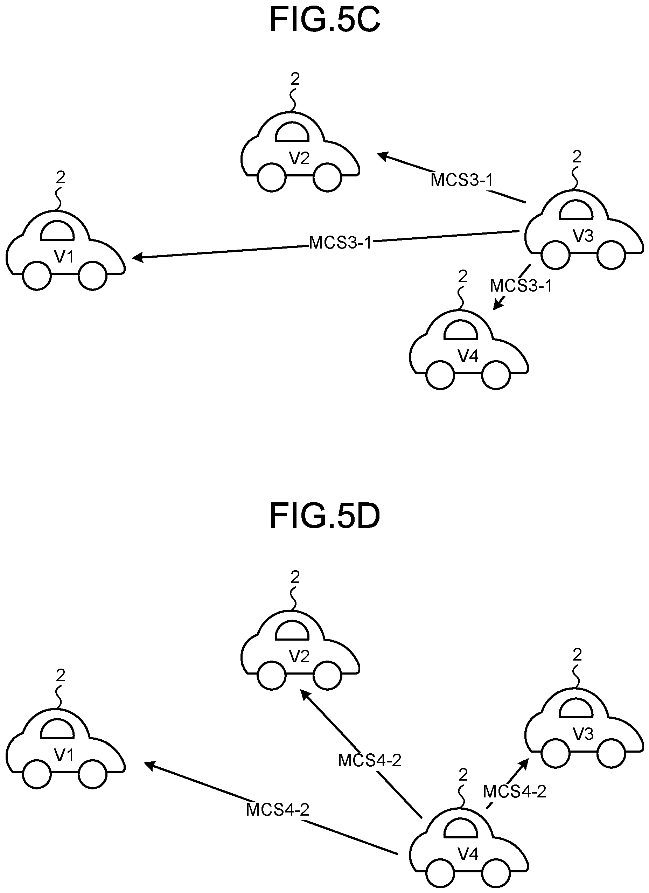

FIG. 5C is a diagram illustrating an example of the MCS setting operation of the terminal device 2 indicated by V3. After the terminal device 2 indicated by V3 selects the worst link L3 with the terminal device 2 indicated by V1, the terminal device 2 indicated by V3 refers to the MCS table 23 and decides the MCS associated with the worst link CSI. The terminal device 2 indicated by V3 sets the decided MCS to the transmission criterion and results in performing wireless transmission with respect to the terminal devices 2 indicated by V1, V2, and V4 included in the group based on the subject transmission criterion.

FIG. 5D is a diagram illustrating an example of the MCS setting operation of the terminal device 2 indicated by V4. After the terminal device 2 indicated by V4 selects the worst link L4 with the terminal device 2 indicated by V1, the terminal device 2 indicated by V4 refers to the MCS table 23 and decides the MCS associated with the worst link CSI. The terminal device 2 indicated by V4 sets the decided MCS to the transmission criterion and results in performing wireless transmission with respect to the terminal devices 2 indicated by V1, V2, and V3 included in the group based on the subject transmission criterion.

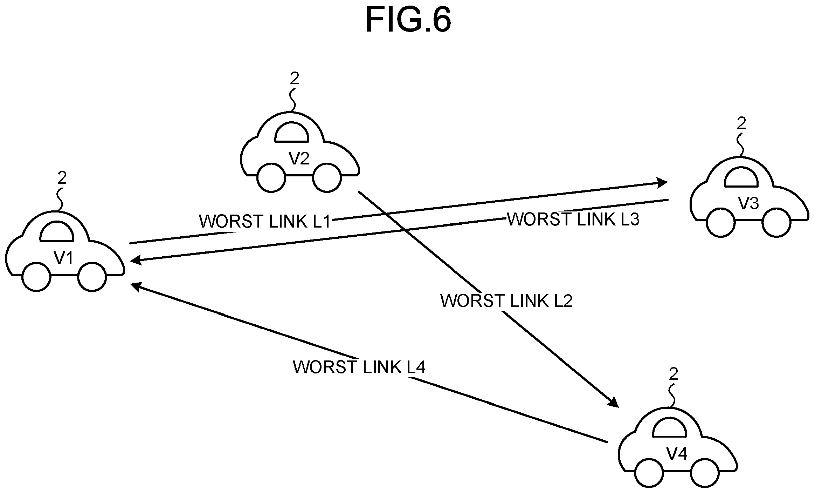

FIG. 6 is a diagram illustrating an example of the worst link of each of the terminal devices 2 included in the group. The terminal device 2 indicated by V1 selects the radio link with the terminal device 2 indicated by V3 as the worst link L1, and results in performing group cast transmission with respect to the terminal devices 2 indicated by V2 and V4 as well as the terminal device 2 indicated by V3 by using MCS associated with the CSI of the worst link L1. Because the terminal device 2 indicated by V1 decides the MCS based on the CSI of the worst link in the same group, it is possible to satisfy the service requirements for V2X of the other radio links included in the same group.

The terminal device 2 indicated by V2 selects the radio link with the terminal device 2 indicated by V4 as the worst link L2 and results in performing group cast transmission with respect to the terminal devices 2 indicated by V1 and V3 as well as the terminal device 2 indicated by V4 by using MCS associated with the CSI of the worst link L2. Because the terminal device 2 indicated by V2 decides the MCS based on the CSI of the worst link included in the same group, it is possible to satisfy the service requirements for V2X of the other radio links in the same group.

The terminal device 2 indicated by V3 selects the radio link with the terminal device 2 indicated by V1 as the worst link L3 and results in performing group cast transmission with respect to the terminal devices 2 indicated by V2 and V4 as well as the terminal device 2 indicated by V1 by using MCS associated with the CSI of the worst link L3. Because the terminal device 2 indicated by V3 decides the MCS based on the CSI of the worst link included in the same group, it is possible to satisfy the service requirements for V2X of the other radio links in the same group.

The terminal device 2 indicated by V4 selects the radio link with the terminal device 2 indicated by V1 as the worst link L4 and results in performing group cast transmission with respect to the terminal devices 2 indicated by V2 and V3 as well as the terminal device 2 indicated by V1 by using MCS associated with the CSI of the worst link L4. Because the terminal device 2 indicated by V4 decides the MCS based on the CSI of the worst link included in the same group, it is possible to satisfy the service requirements for V2X of the other radio links in the same group.

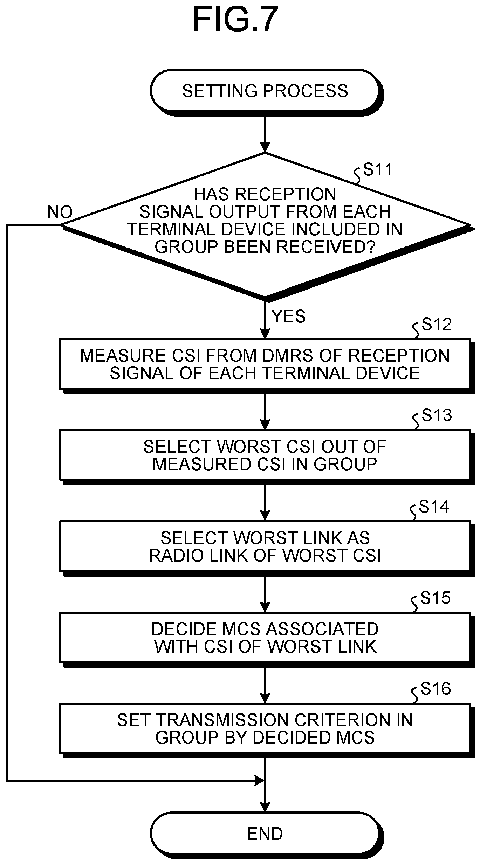

FIG. 7 is a flowchart illustrating an example of a processing operation of the terminal device 2 related to a setting process according to the first embodiment. In FIG. 7, the communicating unit 31 included in the terminal device 2 judges whether a reception signal output from each of the terminal devices 2 included in the group (Step S11). When the measuring unit 32 included in the terminal device 2 has received the reception signal output from each of the terminal devices 2 (Yes at Step S11), the measuring unit 32 measures the CSI from the DMRS included in the reception signal of each of the terminal devices 2 (Step S12). The measuring unit 32 stores the measured CSI of each of the terminal devices 2 in the CSI memory 21.

The selecting unit 33 included in the terminal device 2 refers to the CSI memory 21 and selects the worst CSI out of the measured CSI of each of the terminal devices 2 included in the group (Step S13). The selecting unit 33 selects the worst link as the radio link of the selected worst CSI (Step S14). The selecting unit 33 stores the selected worst link in the worst link memory 22.

The communicating unit 31 refers to the MCS table 23, decides the MCS associated with the CSI of the selected worst link (Step S15), sets a transmission criterion of wireless communication with each of the terminal devices 2 included in the same group by using the decided MCS (Step S16), and ends the processing operation illustrated in FIG. 7. When the communicating unit 31 does not receive the reception signal output from the terminal device 2 (No at Step S11), the communicating unit 31 ends the processing operation illustrated in FIG. 7.

Each of the terminal devices 2 included in the wireless communication system 1 according to the first embodiment measures the CSI of the radio link associated with each of the terminal devices 2 included in the same group and selects the worst link based on the measurement results. Then, each of the terminal devices 2 decides the MCS associated with the CSI of the worst link and sets a transmission criterion with respect to each of the terminal devices 2 included in the group by using the decided MCS. As a result, each of the terminal devices 2 can ensure, without performing feedback transmission of the CSI, wireless communication with high degree of reliability in the group in which the service requirements for V2X communication is satisfied. In addition, because each of the terminal devices 2 does not need to perform feedback transmission of the CSI, there is no processing load needed for the feedback transmission.

Because the terminal device 2 in the wireless communication system 1 adjusts the transmission criteria with respect to the other terminal devices 2 included in the same group such that communication can be performed in the minimum communication quality, it is possible to ensure communication with the other terminal devices 2 included in the group. As a result, there is no need for feedback transmission of the CSI performed with respect to the terminal device 2 on the opposite side.

A description has been given of a case, as an example, in which each of the terminal devices 2 according to the first embodiment decides, without performing feedback transmission of the CSI between the terminal devices 2, a transmission criterion by using the measured CSI measured based on the reception signal output from the terminal device 2 on the opposite side. However, for example, it is assumed that, when transmission intervals are different between the terminal devices 2 and, furthermore, a communication opportunity is decreased, a reception rate of the reception signal is decreased and the accuracy of the measured CSI is decreased. Thus, an embodiment of coping with this situation will be described as a second embodiment.

### Second Embodiment

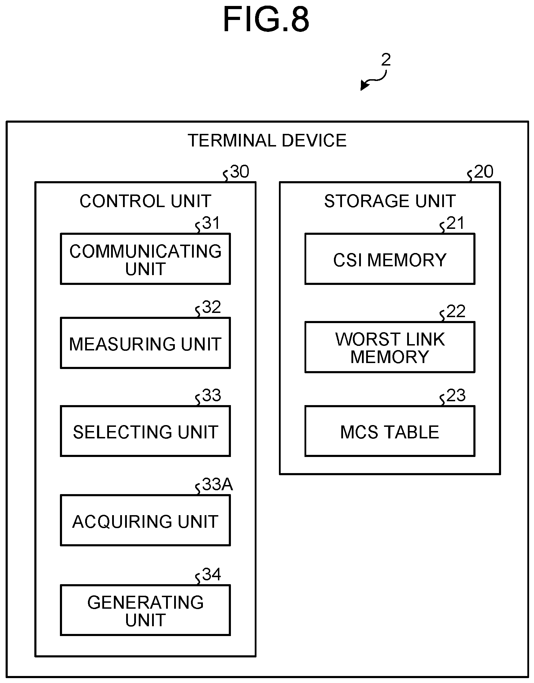

FIG. 8 is a block diagram illustrating an example of a functional configuration of the terminal device 2 according to the second embodiment. Furthermore, by assigning the same reference numerals to components having the same configuration as those in the wireless communication system 1 according to the first embodiment, overlapped descriptions of the configuration and the operation thereof will be omitted.

The terminal device 2 according to the second embodiment differs from the terminal device 2 according to the first embodiment in that the terminal device 2 performs feedback transmission by transmitting the measured CSI of the worst link as feedback CSI to the terminal device 2 on the opposite side. The terminal device 2 illustrated in FIG. 8 includes a generating unit 34, in addition to the communicating unit 31, the measuring unit 32, the selecting unit 33, and the acquiring unit 33A. The generating unit 34 generates control information on a control channel, such as a physical sidelink control channel (PSCCH), or the like. The generating unit 34 stores the measured CSI that is the measurement result of the own device and that is associated with the terminal device 2 on the opposite side in the PSCCH as the feedback CSI. Then, the communicating unit 31 transmits the PSCCH including the feedback CSI to the terminal device 2 on the opposite side. As a result, the acquiring unit 33A included in the terminal device 2 on the opposite side decodes the received PSCCH and acquires the feedback CSI. Furthermore, the terminal device 2 on the opposite side adjusts, by using the acquired feedback CSI, the measured CSI of the radio link associated with the subject feedback transmission source that is being stored in the CSI memory 21.

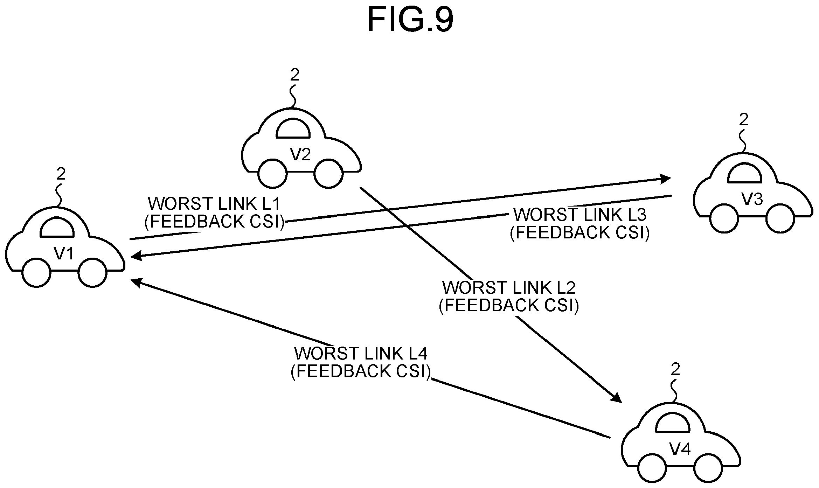

In the following, an operation of the wireless communication system 1 according to the second embodiment will be described. FIG. 9 is a diagram illustrating an example of a CSI feedback operation of each of the terminal devices 2 included in the group. The terminal device 2 indicated by V1 illustrated in FIG. 9 stores the measured CSI measured from the DMRS included in the reception signal output from the terminal device 2 indicated by V3 in the PSCCH as the feedback CSI. The terminal device 2 indicated by V1 transmits the PSCCH to the terminal device 2 indicated by V3 via the worst link L1. The terminal device 2 indicated by V3 decodes of the PSCCH included in the reception signal received from the terminal device 2 indicated by V1 via the worst link L1 and extracts the feedback CSI. Then, the terminal device 2 indicated by V3 uses the extracted feedback CSI and adjusts the measured CSI that is associated with the worst link L1 and that is being stored in the CSI memory 21. As a result, the terminal device 2 indicated by V3 can ensure highly accurate CSI with respect to the worst link L1.

The terminal device 2 indicated by V2 stores the measured CSI measured from the DMRS included in the reception signal output from the terminal device 2 indicated by V4 in the PSCCH as the feedback CSI. The terminal device 2 indicated by V2 transmits the PSCCH to the terminal device 2 indicated by V4 via the worst link L2. The terminal device 2 indicated by V4 decodes the PSCCH included in the reception signal received from the terminal device 2 indicated by V4 via the worst link L2 and extracts the feedback CSI. Then, the terminal device 2 indicated by V4 uses the extracted feedback CSI and adjusts the measured CSI that is associated with the worst link L2 and that is being stored in the CSI memory 21. As a result, the terminal device 2 indicated by V4 can ensure highly accurate CSI with respect to the worst link L2.

The terminal device 2 indicated by V3 stores the measured CSI measured from the DMRS included in the reception signal output from the terminal device 2 indicated by V1 via the worst link L3 in the PSCCH as the feedback CSI. The terminal device 2 indicated by V3 transmits the PSCCH to the terminal device 2 indicated by V1 via the worst link L3. The terminal device 2 indicated by V1 decodes the PSCCH included in the reception signal received from the terminal device 2 indicated by V3 via the worst link L3 and extracts the feedback CSI. Then, the terminal device 2 indicated by V1 uses the extracted feedback CSI and adjusts the measured CSI that is associated with the worst link L3 and that is being stored in the CSI memory 21. As a result, the terminal device 2 indicated by V1 can ensure highly accurate CSI with respect to the worst link L3.

The terminal device 2 indicated by V4 stores the measured CSI measured from the DMRS included in the reception signal output from the terminal device 2 indicated by V1 via the worst link L4 in the PSCCH as the feedback CSI. The terminal device 2 indicated by V4 transmits the PSCCH to the terminal device 2 indicated by V1 via the worst link L4. The terminal device 2 indicated by V1 decodes the PSCCH included in the reception signal received from the terminal device 2 indicated by V4 via the worst link L4 and extracts the feedback CSI. Then, the terminal device 2 indicated by V1 uses the extracted feedback CSI and adjusts the measured CSI that is associated with the worst link L3 and that is being stored in the CSI memory 21. As a result, the terminal device 2 indicated by V1 can ensure highly accurate CSI with respect to the worst link L4.

Regarding the terminal device 2 indicated by V1 illustrated in FIG. 9, the worst link L1 is an open loop for measuring the CSI by using the DMRS output from the terminal device 2 indicated by V3 on the opposite side and the worst links L3 and L4 are closed loops for receiving the feedback CSI output from the terminal devices 2 indicated by V3 and V4, respectively, on the opposite side. Regarding the terminal device 2 indicated by V2, the worst link L2 is an open loop from the terminal device 2 indicated by V4 on the opposite side. Regarding the terminal device 2 indicated by V3, the worst link L3 is an open loop for measuring the CSI by using the DMRS output from the terminal device 2 indicated by V1 on the opposite side and the worst link L1 is a closed loop for receiving the feedback CSI output from the terminal device 2 indicated by V1 on the opposite side. Regarding the terminal device 2 indicated by V4, the worst link L4 is an open loop for measuring the CSI by using the DMRS output from the terminal device 2 indicated by V1 on the opposite side and the worst link L2 is a closed loop for receiving the feedback CSI output from the terminal device 2 indicated by V2 on the opposite side. Each of the terminal devices 2 tabulates the information for identifying whether the worst link of the own device is an open loop or a closed loop.

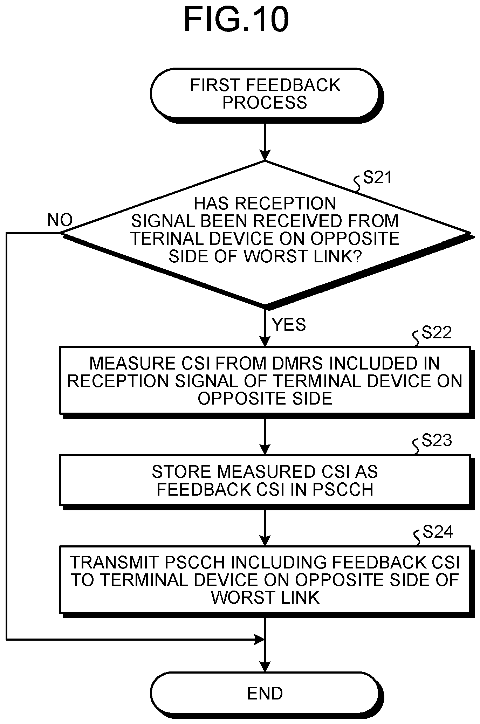

FIG. 10 is a flowchart illustrating an example of a processing operation of the terminal device 2 related to a first feedback process according to the second embodiment. In FIG. 10, the communicating unit 31 included in the terminal device 2 judges whether the reception signal has been received from the terminal device 2 on the opposite side having the worst link (Step S21). When the reception signal has been received from the terminal device 2 on the opposite side (Yes at Step S21), the measuring unit 32 included in the terminal device 2 measures the CSI based on the DMRS included in the reception signal (Step S22). The measuring unit 32 stores the measured CSI that is the measurement result in the CSI memory 21.

The generating unit 34 included in the terminal device 2 stores, in the PSCCH as the feedback CSI, the measured CSI that is associated with the terminal device 2 on the opposite side having the worst link and that is being stored in the CSI memory 21 (Step S23). Then, the communicating unit 31 transmits the PSCCH including the feedback CSI to the terminal device 2 on the opposite side having the worst link (Step S24), and ends the processing operation illustrated in FIG. 10. Furthermore, when the communicating unit 31 does not receive the reception signal from the terminal device 2 on the opposite side having the worst link (No at Step S21), the communicating unit 31 ends the processing operation illustrated in FIG. 10.

When each of the terminal devices 2 in the wireless communication system 1 according to the second embodiment receives the feedback CSI from the terminal device 2 on the opposite side having the worst link, each of the terminal devices 2 uses the feedback CSI and adjusts the measured CSI that is associated with the terminal device 2 on the opposite side having the worst link and that is being stored in the CSI memory 21. As a result, each of the terminal devices 2 can ensure highly accurate CSI of the worst link by using the feedback CSI.

In a case in which each of the terminal devices 2 manages information for identifying the closed loop or the open loop for each worst link to which the own device is connected, each of the terminal devices 2 can identify the closed loop or the open loop for each worst link. Each of the terminal devices 2 decides the MCS while being aware that the accuracy of the closed loop is higher than that of the open loop. Transmission of a packet from each of the terminal devices 2 is based on the feedback CSI of the closed loop and the measured CSI of the open loop. The closed loop is given higher priority than the open loop in terms of packet transmission. However, this only depends on implementation of each of the terminal devices 2.

In the second embodiment described above, a case in which the feedback CSI is stored in the PSCCH has been exemplified, however, the embodiment is not limited to PSCCH. It may also be possible to store the feedback CSI in a control channel that is other than the control channel of the PSCCH, and furthermore, modifications are possible as needed.

### Third Embodiment

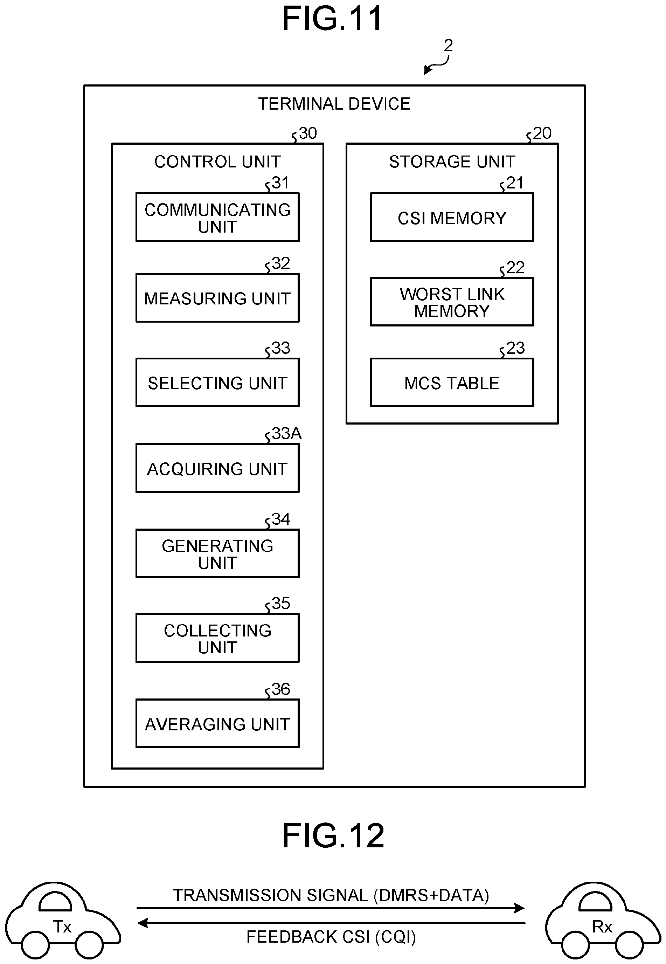

FIG. 11 is a block diagram illustrating an example of a functional configuration of the terminal device 2 according to a third embodiment. Furthermore, by assigning the same reference numerals to components having the same configuration as those in the wireless communication system 1 according to the second embodiment, overlapped descriptions of the configuration and the operation thereof will be omitted.

The terminal device 2 according to the third embodiment differs from the terminal device 2 according to the second embodiment in that the terminal device 2 measures the CSI based on the DMRS included in the reception signal for each predetermined period, averages the pieces of measured CSI by an amount corresponding to the predetermined number of times, and transmits the averaged pieces of measured CSI to the terminal device 2 on the opposite side.

The terminal device 2 illustrated in FIG. 11 includes a collecting unit 35 and an averaging unit 36 instead of the communicating unit 31, the measuring unit 32, the selecting unit 33, the acquiring unit 33A, and the generating unit 34. The measuring unit 32 measures the CSI based on the DMRS included in the reception signal in each of the predetermined periods from the terminal device 2 on the opposite side having the worst link. The reception signal in a predetermined period mentioned here is, for example, a reception signal having a predetermined frequency in a frequency domain or a reception signal having a specific interval in a time domain. The measuring unit 32 sequentially stores the pieces of measured CSI in each of the predetermined periods in the CSI memory 21.
The collecting unit 35 judges whether the measured CSI that is obtained from each of the predetermined periods and that is being stored in the CSI memory 21 corresponds to an amount of the predetermined number of times. When the measured CSI in each of the predetermined periods corresponds to the amount of the predetermined number of times, the collecting unit 35 collects the pieces of measured CSI that corresponds to an amount of the predetermined number of times and that is being stored in the CSI memory 21. Furthermore, the averaging unit 36 averages the pieces of measured CSI that has been collected by the collecting unit 35 and that corresponds to an amount of the predetermined number of times, and outputs the averaged measured CSI to the generating unit 34 as the feedback CSI. The generating unit 34 stores the averaged feedback CSI in the PSCCH. Then, the communicating unit 31 transmits the PSCCH including the feedback CSI to the terminal device 2 on the opposite side. Consequently, the terminal device 2 on the opposite side decodes the PSCCH including the feedback CSI and adjusts the measured CSI of the worst link by using the feedback CSI. Of course, instead of averaging the CSI, it is possible to perform linear smoothing. For example, ACSI(n)=a*ACSI(n-1)+(1-a)*CSI(n), where, a denotes a smoothing coefficient, ACSI(n) denotes the CSI that has been subjected to linear smoothing, and CSI(n) denotes the CSI that has been instantaneously measured.

In the following, an operation of the wireless communication system 1 according to the third embodiment will be described. FIG. 12 is a diagram illustrating an example of a CSI feedback operation between the terminal device 2 on the reception side and the terminal device 2 on the transmission side. The terminal device 2 on the transmission side illustrated in FIG. 12 transmits a transmission signal including data and a DMRS to the terminal device 2 on the reception side. When the terminal device 2 on the reception side receives the reception signal in the predetermined period, the terminal device 2 sequentially measures the pieces of CSI based on the DMRS included in the reception signal and sequentially stores the pieces of measured CSI in the CSI memory 21. When an amount of the measured CSI that is being stored in the CSI memory 21 corresponds to an amount of the predetermined number of times, the terminal device 2 on the reception side averages the storing measured CSI corresponding to an amount of the predetermined number of times and stores the averaged measured CSI in the PSCCH as the feedback CSI.
The terminal device 2 on the reception side transmits the PSCCH including the feedback CSI to the terminal device 2 on the transmission side. The terminal device 2 on the transmission side decodes the PSCCH including the feedback CSI and adjusts the measured CSI by using the feedback CSI.

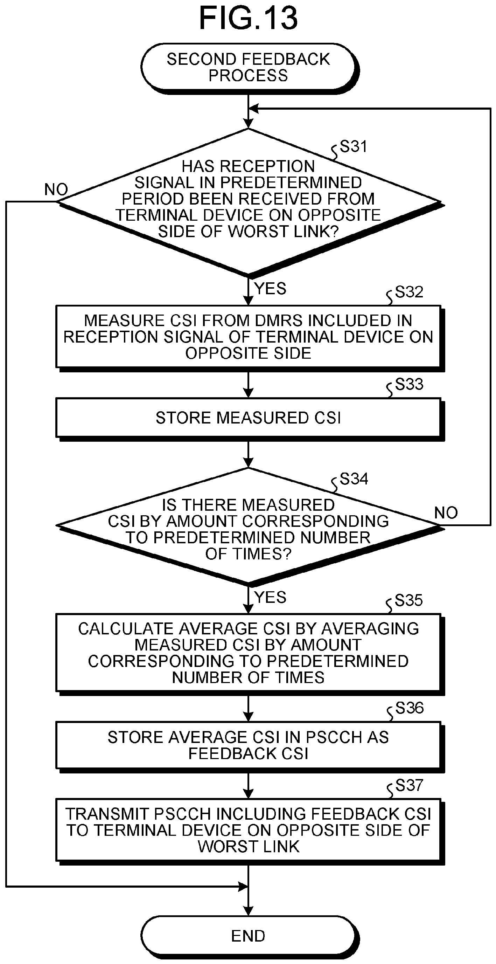

FIG. 13 is a flowchart illustrating an example of a processing operation of the terminal device 2 related to the second feedback process according to the third embodiment. In FIG. 13, the communicating unit 31 included in the terminal device 2 judges a reception signal in a predetermined period has been received from the terminal device 2 on the opposite side having the worst link (Step S31). When the measuring unit 32 included in the terminal device 2 has received the reception signal in the predetermined period from the terminal device 2 on the opposite side (Yes at Step S31), the measuring unit 32 measures the CSI based on the DMRS included in the reception signal of the terminal device 2 on the opposite side (Step S32). The measuring unit 32 stores the measured CSI in the CSI memory 21 (Step S33).

Furthermore, the collecting unit 35 included in the terminal device 2 judges whether an amount of the measured CSI that is being stored in the CSI memory 21 corresponds to an amount of the predetermined number of times (Step S34). When the amount of the measured CSI corresponds to the amount of predetermined number of times (Yes at Step S34), the averaging unit 36 included in the terminal device 2 averages the pieces of measured CSI by an amount corresponding to an amount of the predetermined number of times and calculates the average CSI (Step S35).

The generating unit 34 included in the terminal device 2 stores the calculated average CSI in the PSCCH as the feedback CSI (Step S36). Then, the communicating unit 31 transmits the PSCCH including the feedback CSI to the terminal device 2 on the opposite side having the worst link (Step S37), and ends the processing operation illustrated in FIG. 13.

When the amount of the measured CSI does not corresponds to the amount of predetermined number of times (No at Step S34), the communicating unit 31 moves to Step S31 in order to judge whether the reception signal has been received from the terminal device 2 on the opposite side. When the communicating unit 31 does not receive the reception signal from the terminal device 2 on the opposite side (No at Step S31), the communicating unit 31 ends the processing operation illustrated in FIG. 13.

When each of the terminal devices 2 included in the wireless communication system 1 according to the third embodiment receives the reception signal in the predetermined period, each of the terminal devices 2 measures the CSI based on the DMRS included in the reception signal and sequentially stores the pieces of measured CSI. Furthermore, when an amount of the storing measured CSI corresponds to an amount of the predetermined number of times, the terminal device 2 averages the pieces of measured CSI corresponding to an amount of the predetermined number of times and calculates the average CSI. Furthermore, each of the terminal devices 2 performs feedback transmission on the average CSI as the feedback CSI with respect to the terminal device 2 on the opposite side by using the PSCCH. As a result, because the terminal device 2 on the opposite side receives the feedback CSI obtained by averaging the measured CSI for each predetermined period included in the predetermined period of time, it is possible to ensure stable CSI.

Furthermore, a case has been described, as an example, in which the terminal device 2 according to the third embodiment described above measures the CSI based on the DMRS included in the reception signal for each predetermined period and stores the periodic measured CSI in the PSCCH as the feedback CSI. However, the terminal device 2 may also use non-periodic measured CSI instead of the periodic measured CSI. When the terminal device 2 transmits, for example, the non-periodic CSI to the terminal device 2 on the opposite side as the feedback CSI, the terminal device 2 stores the feedback CSI in the physical sidelink shared channel (PSSCH) and performs the transmission.

Furthermore, a case in which the CSI includes CQI has been exemplified; however, when the terminal device 2 uses multiple-input and multiple-output (MIMO), in addition to the CQI, the CSI includes a precoding matrix indicator (PMI) and a rank indicator (RI). In this case, the terminal device 2 may also average, in addition to the CQI corresponding to an amount the predetermined number of times, the PMI and the RI by an amount corresponding to the predetermined number of times and transmit the averaged PMI and RI to the terminal device 2 on the opposite side by using the PSCCH, and furthermore, modifications are possible as needed.

### Fourth Embodiment

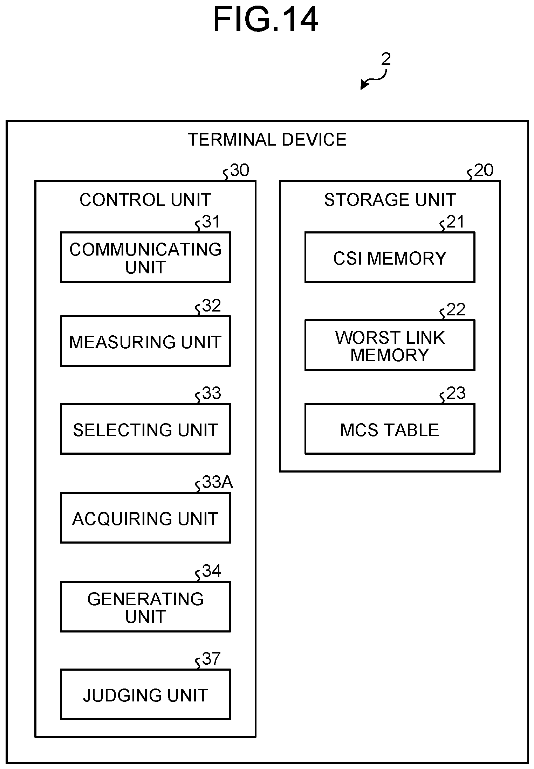

FIG. 14 is a block diagram illustrating an example of a functional configuration of the terminal device 2 according to the fourth embodiment. Furthermore, by assigning the same reference numerals to components having the same configuration as those in the wireless communication system 1 according to the second embodiment, overlapped descriptions of the configuration and the operation thereof will be omitted. The terminal device 2 illustrated in FIG. 14 includes a judging unit 37, in addition to the communicating unit 31, the measuring unit 32, the selecting unit 33, the acquiring unit 33A, and the generating unit 34. The judging unit 37 judges whether the radio link with the terminal device 2 on the opposite side has a first radio link and a second radio link. The first radio link is the radio link for transmitting a transmission signal to the terminal device 2 on the opposite side, whereas the second radio link is the radio link for receiving a reception signal including the feedback CSI from the terminal device 2 on the opposite side. The terminal device 2 manages the loop identification information for identifying the closed loop or the open loop for each worst link. Namely, the judging unit 37 refers to the loop identification information and judges whether the worst link with the terminal device 2 on the opposite side includes the first radio link and the second radio link.

When the radio link with the terminal device 2 on the opposite side includes the first radio link and the second radio link and when reception of the feedback CSI performed by using the second radio link is permitted, the communicating unit 31 prohibits transmission of the CSI feedback by using the first radio link.

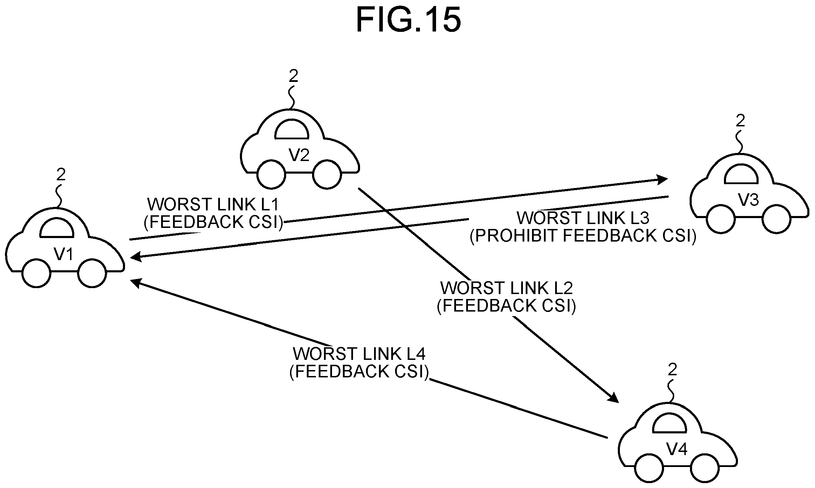

In the following, an operation of the wireless communication system 1 according to the fourth embodiment will be described. FIG. 15 is a diagram illustrating an example of the CSI feedback operation of each of the terminal devices 2 included in the group. It is assumed that the terminal device 2 indicated by V3 illustrated in FIG. 15 has the radio links of the worst link L1 and the worst link L3 with respect to the terminal device 2 indicated by V1 and permits to receive the feedback CSI by using the worst link L1. In this case, the terminal device 2 indicated by V3 prohibits feedback transmission of the feedback CSI with respect to the terminal device 2 indicated by V1 on the opposite side by using the worst link L3.

The worst link illustrated in FIG. 15 are four, i.e., two pieces of the links L1 and L3 between the terminal device 2 indicated by V1 and the terminal device 2 indicated by V3, one piece of the link L2 between the terminal device 2 indicated by V2 and the terminal device 2 indicated by V4, and one piece of the link L4 between the terminal device 2 indicated by V1 and the terminal device 2 indicated by V4. However, between the links L1 and L3 between the terminal device 2 indicated by V1 and the terminal device 2 indicated by V3, the feedback transmission using the link L3 is prohibited. Namely, the terminal device 2 indicated by V3 measures the CSI by using the DMRS obtained from the terminal device 2 indicated by V1 and acquires the feedback CSI obtained from the terminal device 2 indicated by V1. Then, the terminal device 2 indicated by V3 adjusts the measured CSI by using the feedback CSI obtained from the terminal device 2 indicated by V1. The terminal device 2 indicated by V3 and the terminal device 2 indicated by V1 aggregates the pieces of CSI feedback to a single piece of link. As a result, because the number of pieces of feedback used in the wireless communication system 1 illustrated in FIG. 15 is reduced from four to three, it is possible to reduce the processing load needed for feedback. For example, when the wireless communication system 1 in which the number of pair of the worst links is N and the number of pieces of feedback is M is used in the embodiment, M-N≥M/2 holds as the number of pieces of feedback.

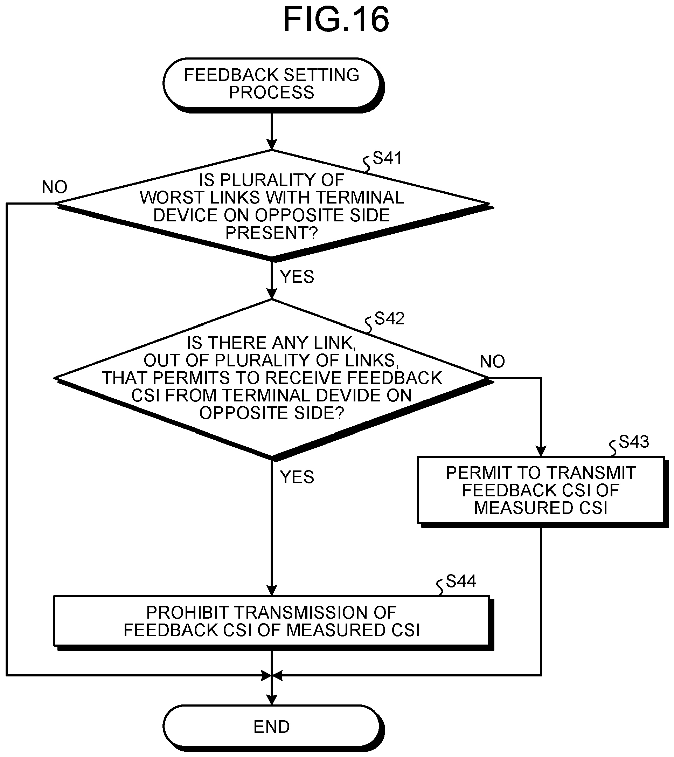

FIG. 16 is a flowchart illustrating an example of a processing operation of the terminal device 2 related to the feedback setting process according to the fourth embodiment. In FIG. 16, the judging unit 37 included in the terminal device 2 judges whether a plurality of worst links are present between the terminal device 2 on the opposite side (Step S41). When the plurality of worst links are present between the terminal device 2 on the opposite side (Yes at Step S41), the judging unit 37 judges whether a link that permits to receive the feedback CSI output from the terminal device 2 on the opposite side is present from among the plurality of worst links (Step S42). Furthermore, in a case in which the plurality of worst links are present between the terminal device 2 on the opposite side, this can be said to be the same communication state because the communication state of each of the worst links is the same propagation path.

When there is no link for permitting the reception of the feedback CSI output from the terminal device 2 on the opposite side (No at Step S42), the communicating unit 31 included in the terminal device 2 permits feedback transmission of the measured CSI of the own device with respect to the terminal device 2 on the opposite side (Step S43). Then, the terminal device 2 ends the processing operation illustrated in FIG. 16.

When there is a link for receiving the feedback CSI output from the terminal device 2 on the opposite side (Yes at Step S42), the communicating unit 31 prohibits the feedback transmission of the measured CSI of the own device with respect to the terminal device 2 on the opposite side (Step S44), and ends the processing operation illustrated in FIG. 16.

When each of the terminal devices 2 according to the fourth embodiment has a plurality of worst links between the terminal device 2 on the opposite side and permits to receive the feedback CSI output from the terminal device 2 on the opposite side having one of the worst links, each of the terminal devices 2 prohibits transmission of the feedback CSI with respect to the terminal device 2 on the opposite side having the other one of the worst links. As a result, the terminal device 2 can reduce the processing load needed for the feedback transmission in the group by prohibiting feedback transmission of the CSI overlapped with the terminal device 2 on the opposite side and reducing the number of pieces of feedback transmission.

### Fifth Embodiment

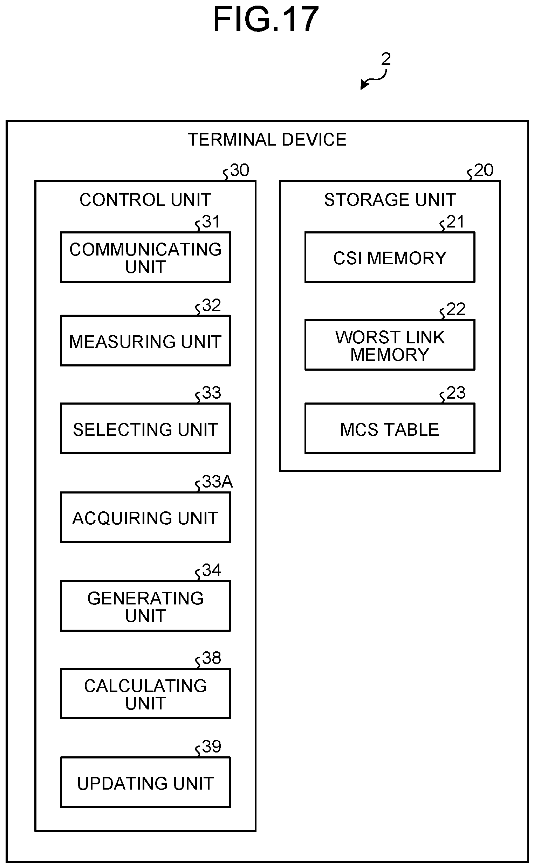

FIG. 17 is a block diagram illustrating an example of a functional configuration of the terminal device 2 according to a fifth embodiment. Furthermore, by assigning the same reference numerals to components having the same configuration as those in the wireless communication system 1 according to the second embodiment, overlapped descriptions of the configuration and the operation thereof will be omitted. The terminal device 2 illustrated in FIG. 17 includes a calculating unit 38 and an updating unit 39, in addition to the communicating unit 31, the measuring unit 32, the selecting unit 33, the acquiring unit 33A, and the generating unit 34. The control unit 30 decodes the PSCCH included in the reception signal output from the terminal device 2 on the opposite side and acquires the feedback CSI.

The measuring unit 32 measures the CSI based on the DMRS included in the reception signal output from the terminal device 2 on the opposite side and stores the measured CSI in the CSI memory 21. Furthermore, the calculating unit 38 calculates a CSI difference (CSI_{CH}-CSI_{RS}) that is a difference between the acquired feedback CSI (CSI_{CH}) and the measured CSI (CSI_{RS}) that is being stored in the CSI memory 21. The generating unit 34 stores the calculated CSI difference in the PSCCH. Then, the communicating unit 31 transmits the PSCCH including the CSI difference to the terminal device 2 on the opposite side. The updating unit 39 adjusts and updates the measured CSI that is being stored in the CSI memory 21 based on the CSI difference received from the terminal device 2 on the opposite side.

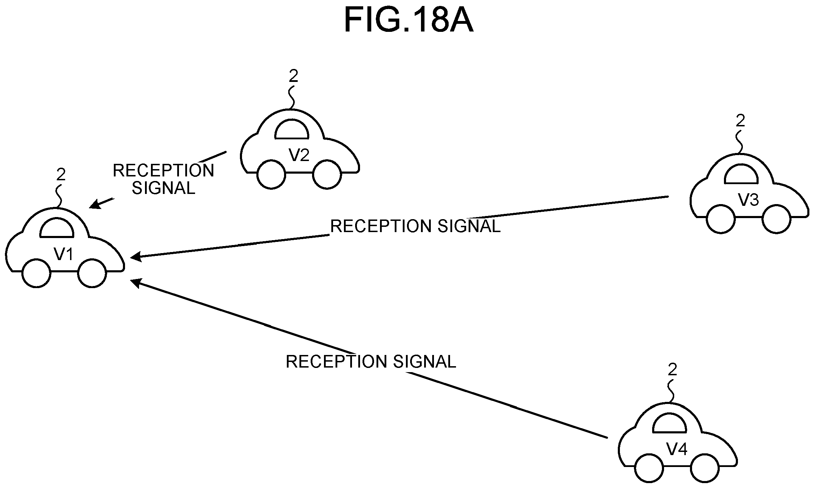

In the following, an operation of the wireless communication system 1 according to the fifth embodiment will be described. FIG. 18A is a diagram illustrating an example of an operation related to a difference transmission process performed by the terminal device 2 indicated by V1. The terminal device 2 indicated by V1 illustrated in FIG. 18A receives a reception signal, such as a data signal and the like, from the terminal devices 2 V2, V3, V4 included in the same group. When the terminal device 2 indicated by V1 receives the reception signal output from each of the terminal devices 2 V2, V3, and V4, the terminal device 2 indicated by V1 measures the CSI of each of the terminal devices 2 based on the DMRS included in the reception signal and stores the measured CSI of each of the radio links in the CSI memory 21.

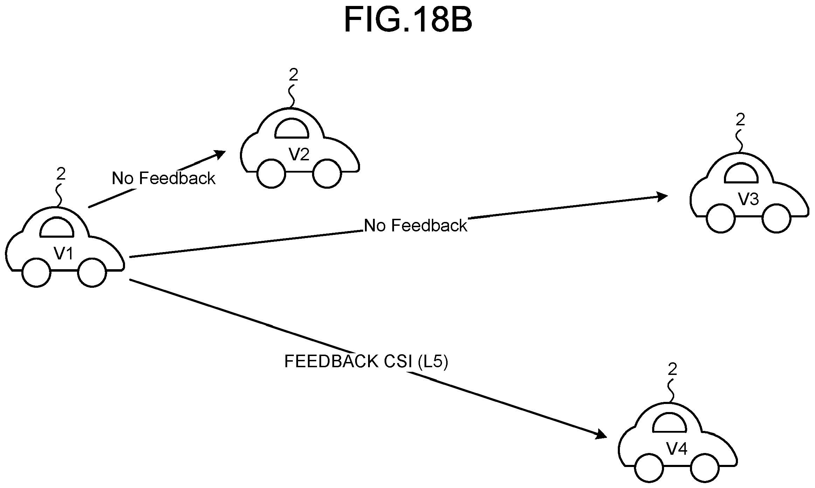

FIG. 18B is a diagram illustrating an example of an operation related to the difference transmission process performed by the terminal device 2 indicated by V1. It is assumed that the terminal device 2 indicated by V1 selects, based on the measured CSI of each of the radio links, the radio link between the terminal device 2 indicated by V4 as the worst link L5 from among the radio links included in the same group. The terminal device 2 indicated by V1 calculates the difference between the measured CSI of the worst link L5 and the feedback CSI of the worst link output from the terminal device 2 indicated by V4 as the CSI difference. When the radio link with the terminal device 2 indicated by V4 is the worst link and there is a difference between the measured CSI and the feedback CSI, the terminal device 2 indicated by V1 transmits the CSI difference to the terminal device 2 indicated by V4 by using the PSCCH. Then, the terminal device 2 indicated by V4 decodes the PSCCH output from the terminal device 2 indicated by V1, extracts the CSI difference, and adjusts and updates, based on the extracted CSI difference, the measured CSI that is associated with the terminal device 2 indicated by V1 and that is being stored by the own device.

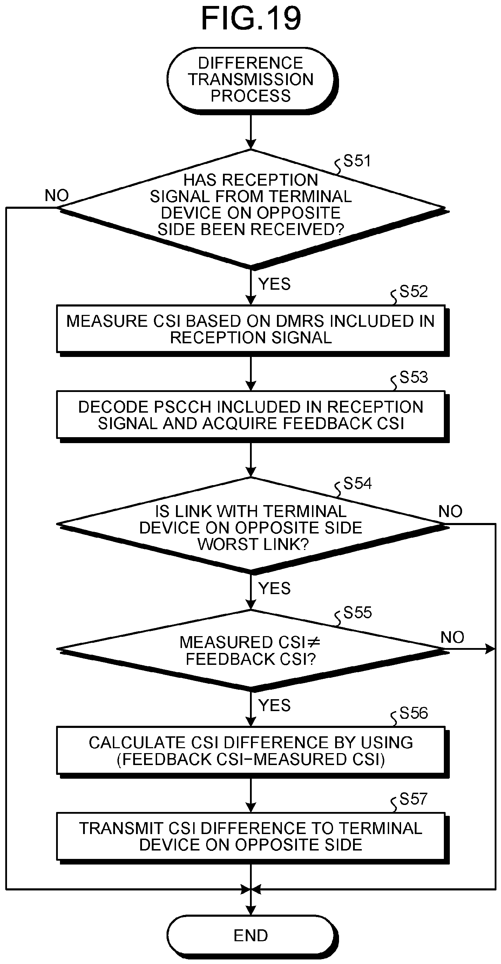

FIG. 19 is a flowchart illustrating an example of a processing operation of the terminal device 2 related to the difference transmission process. In FIG. 19, the communicating unit 31 included in the terminal device 2 judges whether the reception signal has been received from the terminal device 2 on the opposite side (Step S51). The measuring unit 32 included in the terminal device 2 measures the CSI based on the DMRS included in the reception signal output from the terminal device 2 on the opposite side (Step S52). Then, the measuring unit 32 stores the measured CSI in the CSI memory 21.

The acquiring unit 33A included in the terminal device 2 decodes the PSCCH included in the reception signal output from the terminal device 2 on the opposite side and acquires the feedback CSI (Step S53). The control unit 30 refers to the worst link memory 22 and judges whether the link with the terminal device 2 on the opposite side is the worst link (Step S54). When the radio link with the terminal device 2 on the opposite side is the worst link (Yes at Step S54), the control unit 30 judges whether the measured CSI of the worst link is different from the feedback CSI (Step S55).

When the measured CSI of the worst link is different from the feedback CSI (Yes at Step S55), the calculating unit 38 included in the terminal device 2 calculates the CSI difference between the measured CSI of the worst link and the feedback CSI (Step S56). The communicating unit 31 stores the calculated CSI difference in the PSCCH of the worst link, transmits the PSCCH to the terminal device 2 on the opposite side (Step S57), and ends the processing operation illustrated in FIG. 19.

When the communicating unit 31 included in the terminal device 2 does not receive the reception signal output from the terminal device 2 on the opposite side (No at Step S51), the communicating unit 31 ends the processing operation illustrated in FIG. 19. When the radio link with the terminal device 2 on the opposite side is not the worst link (No at Step S54), the control unit 30 ends the processing operation illustrated in FIG. 19. When the measured CSI and the feedback CSI are not different (No at Step S55), namely, when the measured CSI and the feedback CSI are the same, the control unit 30 ends the processing operation illustrated in FIG. 19.

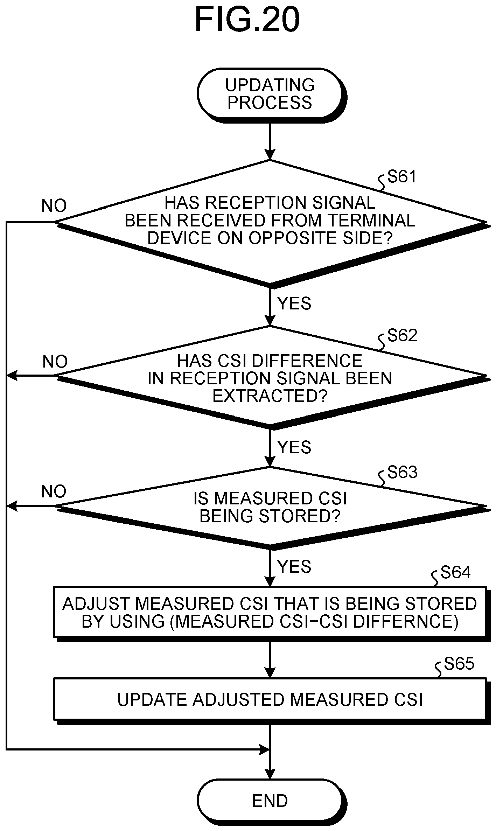

FIG. 20 is a flowchart illustrating an example of a processing operation of the terminal device 2 related to an updating process. Furthermore, it is assumed that, when the terminal device 2 that performs the difference transmission process illustrated in FIG. 20 is, for example, the terminal device 2 indicated by V1 illustrated in FIG. 18B, the terminal device 2 that performs the updating process illustrated in FIG. 20 is, for example, the terminal device 2 indicated by V4 illustrated in FIG. 18B. In FIG. 20, the communicating unit 31 included in the terminal device 2 judges whether the reception signal output from the terminal device 2 on the opposite side has been received (Step S61). When the acquiring unit 33A included in the terminal device 2 receives the reception signal output from the terminal device 2 on the opposite side (Yes at Step S61), the acquiring unit 33A decodes the PSCCH included in the reception signal and judges whether the CSI difference has been extracted (Step S62).

When the CSI difference has been extracted (Yes at Step S62), the updating unit 39 included in the terminal device 2 judges whether the measured CSI that is being stored in the CSI memory 21 is present (Step S63). When the measured CSI that is being stored in the CSI memory 21 is present (Yes at Step S63), the updating unit 39 adjusts the storing measured CSI based on (measured CSI-CSI difference) (Step S64). The updating unit 39 updates the adjusted measured CSI to the CSI memory 21 (Step S65), and ends the processing operation illustrated in FIG. 20.

When the terminal device 2 does not receive the reception signal from the terminal device 2 on the opposite side (No at Step S61) or does not extract the CSI difference (No at Step S62), or the measured CSI is not being stored (No at Step S63), the terminal device 2 ends the processing operation illustrated in FIG. 20.

In the wireless communication system 1 according to the fifth embodiment, the terminal device 2 measures the CSI from the DMRS included in the reception signal output from the terminal device 2 on the opposite side, decodes the PSCCH included in the reception signal output from the terminal device 2 on the opposite side, and acquires the feedback CSI. When the radio link with the terminal device 2 on the opposite side is the worst link and when the feedback CSI and the measured CSI are different, the terminal device 2 calculates the CSI difference between the feedback CSI and the measured CSI. The terminal device 2 stores the CSI difference into the PSCCH and transmits the PSCCH to the terminal device 2 on the opposite side having the worst link. As a result, because the terminal device 2 transmits only the CSI difference as the feedback CSI, the terminal device 2 can reduce the processing load thereof.

Furthermore, the terminal device 2 on the opposite side acquires the CSI difference by decoding the PSCCH and adjusts, based on the CSI difference, the measured CSI of the worst link that is being stored in the CSI memory 21. As a result, it is possible to ensure highly accurate CSI related to the worst link.

Furthermore, in the wireless communication system 1 according to the embodiment described above, the group cast transmission in the mode 4 has been described as an example; however, it is also be applicable to broadcast transmission and unicast transmission, and furthermore, modifications are possible as needed.

Furthermore, in the embodiment, feedback transmission of the CSI has been described as an example; however, it is not limited to feedback transmission of the CSI. For example, it is also applicable to hybrid automatic repeat request (HARQ) feedback, power control controlling feedback, link adaptation controlling feedback, or the like.

In the embodiments described above, V2V communication included in V2X communication performed by the wireless communication system 1 has been exemplified; however, for example, it is also applicable to V2X communication, such as V2P communication, V2I communication, or the like.

### Explanation of Reference

- 1: wireless communication system
- 2: terminal device
- 31: communicating unit
- 32: measuring unit
- 33: selecting unit
- 33A: acquiring unit
- 34: generating unit
- 36: averaging unit
- 38: calculating unit

## Claims

1. A terminal device comprising:
a communicating unit that directly communicates with another terminal device through a radio link;
a measuring unit that measures, based on a reception signal output from the other terminal device included in a same group, a communication state of the radio link with the other terminal device; and
a selecting unit that selects a radio link having a lowest communication state out of the communication states measured by the measuring unit, wherein
the communicating unit performs wireless transmission with the other terminal device included in the group based on a transmission criterion that allows the communication state of the lowest radio link selected by the selecting unit to be a predetermined communication state.

2. The terminal device according to claim 1, wherein the communicating unit transmits the communication state that is a measurement result of the lowest radio link selected by the selecting unit to the other terminal device that is wirelessly connected to the selected lowest radio link.

3. The terminal device according to claim 2, further comprising an averaging unit that averages a plurality of measurement results of the communication states in a predetermined period or a predetermined frequency of the lowest radio link selected by the selecting unit, wherein
the communicating unit transmits the communication state averaged by the averaging unit to the other terminal device that is wirelessly connected to the selected lowest radio link.

4. The terminal device according to claim 1, wherein, when the radio link with the other terminal device includes a first radio link that transmits a transmission signal to the other terminal device and a second radio link that receives the reception signal that includes the communication state output from the other terminal device, the communicating unit prohibits transmission of the communication state that is a measurement result obtained by using the first radio link.

5. The terminal device according to claim 1, further comprising:
an acquiring unit that acquires a first communication state from the reception signal that is output from the other terminal device and that includes communication quality of the radio link to which the other terminal device is wirelessly connected;
the measuring unit that measures a second communication state of the radio link based on the reception signal output from the other terminal device; and
the communicating unit that transmits, to the other terminal device, a difference between the first communication state and the second communication state of the radio link to which the other terminal device is wirelessly connected.

6. The terminal device according to claim 5, wherein the communicating unit transmits, to the other terminal device, the difference that is used to adjust the communication state of the radio link that is being stored and that is measured by the other terminal device.

7. The terminal device according to claim 2, wherein, instead of performing transmission of the communication state with respect to the other terminal device included in the group,
the communicating unit performs
feedback transmission of transmission electrical power that controls transmission electrical power with respect to the other terminal device included in the group,
feedback transmission of link conformity control that controls link conformity with respect to the other terminal device included in the group, or
feedback transmission of a retransmission request that requests retransmission of a data signal with respect to the other terminal device included in the group.

8. A wireless communication system comprising:
a first terminal device; and
a second terminal device that performs wireless communication with the first terminal device through a radio link, wherein
the first terminal device includes
a communicating unit that directly communicates with the second terminal device through the radio link,
a measuring unit that measures, based on a reception signal output from the second terminal device included in a same group, a communication state of the radio link with the second terminal device, and
a selecting unit that selects a radio link having a lowest communication state out of the communication states measured by the measuring unit, and
the communicating unit performs wireless transmission with the second terminal device included in the group based on a transmission criterion that allows the communication state of the lowest radio link selected by the selecting unit to be a predetermined communication state.

9. A wireless transmission method that causes a terminal device to execute a process comprising:
communicating directly with another terminal device through a radio link;
measuring, based on a reception signal output from the other terminal device included in a same group, a communication state of the radio link with the other terminal device;
selecting a radio link having a lowest communication state out of the measured communication states; and
performing wireless transmission with the other terminal device included in the group based on a transmission criterion that allows the communication state of the selected lowest radio link to be a predetermined communication state.
